# EUROPEAN PATENT SPECIFICATION

(11) **EP 1 888 289 B1**
(45) Date of publication and mention of the grant of the patent: **08.08.2012**
(21) Application number: 06741204.9
(22) Date of filing: 07.06.2006
(51) Int. Cl.: B23K 9/23, B23K 101/12, B23K 103/24, B23K 9/02, B23K 103/14, C23C 4/00, C23C 4/10

(54) **PROTECTION OF AUTOCLAVE BATTEN STRIPS**
SCHUTZ FÜR AUTOKLAVENLEISTENBÄNDER
PROTECTION DES COUVRE-JOINTS D'AUTOCLAVE

(30) Priority: 07.06.2005 AU 2005902940 P
(43) Date of publication of application: 20.02.2008
(73) Proprietor: Murrin Murrin Operations Pty Ltd, Perth, WA 6000 (AU)
(72) Inventor: BRADBROOK, Michael, Rivervale Western Australia 6103 (AU)
(74) Representative: D'Arcy, Julia
(86) International application number: PCT/AU2006/000788
(87) International publication number: WO 2006/130916

(56) References cited:
- EP-B1- 0 074 803
- US-A- 3 443 306
- US-A- 4 142 664
- DATABASE WPI Week 199930, Derwent Publications Ltd., London, GB; Class M23, AN 1999-351399, XP003004858 & JP 11 129 073 A (NIPPON KOKAN KOJI KK) 18 May 1999
- DATABASE WPI Week 199909, Derwent Publications Ltd., London, GB; Class M23, AN 1999-099845, XP003004859 & JP 10 328 839 A (NKK CORP) 15 December 1998

## Description

### Field of the Invention

This invention relates to vessels used in chemical processing applications, such as hydro-metallurgical refining of metal ore. More particularly, the invention relates to batten strips (also known as batten straps) used in the fabrication of such vessels.

While the invention has been devised particularly in relation to autoclaves, it is not necessarily limited thereto and may find application in other vessels used in chemical processing applications, including pressure vessels, tanks, and heat exchangers.

### Background Art

Autoclaves used in chemical processing applications, such as hydro-metallurgical refining of metal ores, are constructed using titanium owing to its characteristic of corrosion resistance. Typically, the autoclaves are constructed using plates of titanium-clad steel, which can be considerably more cost-effective than solid titanium plate. The titanium provides the corrosion resistance and the steel provides strength as well as a cost-reduction. The plates are positioned one adjacent another and welded together.

Autoclaves constructed of titanium-clad steel require particular fabrication techniques because of differences in metallurgical characteristics, thermal expansion, modulus of elasticity and other aspects. Specifically, titanium and steel cannot be directly fusion welded to each other, owing to brittle inter-metallic formation. Fabrication using titanium-clad steel is typically accomplished using batten strips (sometimes also know as batten straps) at junctions between the plates. The process requires that the titanium cladding be removed from the area around all edges where steel welds are to be made, typically about 12 millimeters inwardly from the plate edges. The steel base is prepared and welded using conventional steel fabrication procedures. The junction between adjacent plates is then cleaned and prepared for titanium welding. A filler metal strip is inserted into the space created by removal of the titanium. The batten strip, which is a wider strip of titanium, is then placed in position so as to overlay the filler strip and also bridge the titanium cladding on opposed sides of the filler strip. The batten strip is then welded along the edges thereof with fillet welds.

A "tell-tale" system is incorporated for identifying leakage from the autoclave arising from a loss of integrity of the weld strips.

In chemical processing applications, the environment in an autoclave is typically harsh. Specifically, slurry flow within the autoclave can erode the batten strip fillet welds, causing them to leak

High pressure acid leach (HPAL) autoclaves have had a long history of batten strip failure and problems associated with leakage through the "tell-tale" systems.

Indeed, erosion of the batten strips has been identified as the single biggest cause of leakage from such autoclaves. Leakage from batten strips is often the primary reason for unplanned internal inspections and repairs on the autoclaves. Pad welding during planned inspections will minimize failures by erosion, however the risk of introducing a weld defect increases proportionally with each re-weld.

The key to reducing erosion and re-welding is to protect the fillet weld from the slurry flow.

Erosion, or more correctly erosion corrosion, is the process where the protective metal oxide is mechanically abraded from the surface of a metal thereby exposing a clean metal surface upon which the oxide film reforms. This process occurs repeatedly and consequently leads to progressive removal of the metal. The process of erosion is velocity dependent. For titanium, there exists a critical velocity below which the oxide film remains intact and protective. This critical velocity is dependent upon the chemical environment, the presence of wearing particles (slurry) and temperature. Erosion is exacerbated by turbulence.

For batten strips, erosion is the primary mode of failure. The fillet welds along the batten strips erode until such time as a breach occurs. Typically this is in the form of a longitudinal crack at the point of minimum weld throat thickness.

Repeat failures due to grinding and weld repairs can be significant. Further, repeated weld repairs to the batten strips can cause cracking in the liner.

There have been various proposals seeking to reduce the rate of erosion of batten strips and therefore increase the time between leaks.

One such proposal involved the use of sacrificial wear strips to protect the fillet welds on the sides of batten strips exposed to slurry flow. The wear strips were manufactured from grade 5 titanium to minimize erosion loss and increase the amount of time between batten strip replacements. Wear strips were not, however, entirely satisfactory as they were isolated from the "tell-tale" system by the batten strip weld. Consequently, any erosion or welding defects that resulted in a loss of the seal could cause crevice corrosion in the titanium cladding. The only way that such a leak could be detected was by a dye penetrant testing procedure, which required that the autoclave be offline.

Another proposal involved the installation of wear plates to limit erosion within the autoclaves. While the wear plates were successful in preventing erosion, cracking along the fillet welds and lifting of plates introduced susceptibility to crevice corrosion. As the extent of such crevice corrosion could possibly exceed the threat of erosion, the proposal did not prove to be altogether viable.

A still further proposal involved a series of boxes affixed to the floor area of the autoclave for the purpose of collecting solids and thereby affording protection of the titanium underneath. This too did not prove to be altogether viable.

Yet another proposal involved the use of recessed batten strips. Because such strips were recessed into the internal surface of the autoclave, they were likely to be less prone to erosion. However, the plates from which the autoclave was fabricated were required to have provision for the recesses, thereby limiting the application of recessed batten strips to autoclaves specifically constructed to accommodate them. Thus, recessed batten strips were not an option of retrofitting to autoclaves not having specific provision for them.

Some further examples of prior art proposals include US 3443306 which describes an improved method of joining clad material and in particular, to a method of joining material clad with an outside layer of material which has superior resistance to corrosion, such as tantalum. Whilst EP0074803 describes the use of plasma arc spray overlay for the protection of joint closures between clad metal parts.

Notwithstanding the considerable efforts directed to the problem of the batten strip erosion as reflected by the various proposals referred to above, no solution has yet been found.

It is against this background, and the problems and difficulties associated therewith, that the present invention has been developed.

The preceding discussion to the invention is intended only to facilitate an understanding of the present invention. It should be appreciated that the discussion is not an acknowledgement or an admission that any of the material referred to was or is part of the common general knowledge as at the priority date of the application.

### Disclosure of the Invention

According to a first aspect of the invention there is provided a vessel comprising a plurality of titanium-clad plates welded one to another, batten strips welded to adjacent plates at the junctions therebetween, the batten strips being welded to the plates by fillet welds extending along the edges thereof, and a coating comprising titanium dioxide on the fillet welds, wherein the coating covers the fillet weld and marginal portions of the adjacent plate and the batten strip and the marginal portions of the adjacent plate and the batten strip covered by the coating each has a width of at least about 10mm.

While the coating can be of any appropriate thickness, a coating thickness of 500 microns has been found to be particularly effective.

Preferably, the coating is applied using thermal coating technology, such as flame spraying.

Preferably, a sealant is applied to the coating. The sealant may comprise a non-volatile, non-flammable sealant.

It is expected that the coating will significantly increase the service life of the batten strips, perhaps to an extent of more than doubling the service life.

Unlike the prior art proposals previously described for limiting erosion within autoclaves, the titanium dioxide coating can be easily removed if necessary.

The titanium dioxide coating may provide protection even in damaged. By way of example, it has (somewhat surprisingly) been found that effective protection for the fillet weld may be provided even in circumstances where some of the coating is removed (such as, for example, by accidental bead blasting the coating during a later maintenance procedure being performed in the autoclave).

According to a second aspect of the invention there is provided a junction between two titanium-clad plates, the junction comprising a batten strip welded to the plates, the batten strip being welded to the plates by fillet welds extending along the edges of the strip and a coating comprising titanium dioxide on the fillet welds, wherein the coating covers the fillet weld and marginal portions of the adjacent plate and the batten strip and the marginal portions of the adjacent plate and the batten strip covered by the coating each has a width of at least about 10mm.

According to a third aspect of the invention there is provided a method of performing reparation work on a vessel (such as an autoclave) fabricated from a plurality of titanium-clad plates welded one to another and having batten strips welded to adjacent plates at the junctions therebetween, the batten strips being welded to the plates by fillet welds extending along the edges thereof, the method comprising the application of a coating comprising titanium dioxide on the fillet welds, wherein the coating is applied to the fillet weld and marginal portions of the adjacent plate and the batten strip and the marginal portions of adjacent plate and the batten strip covered by the coating each has a width of at least about 10mm.

The method by applying the coating to adjacent portions of the plate and batten strip, in this way, the coating is applied to the fillet weld and also to marginal portions of the adjacent plate and batten strip.

Preferably, the coating is applied using thermal coating technology, such as flame spraying.

Preferably, the method further comprises sealing the coating after its application.

Preferably, the area to be coated is cleaned prior to application of the coating. The cleaning process may comprise subjecting the area to a high pressure water spray.

Preferably the method further comprises pre-heating the area to be coated. This assists in removal of any remnant moisture that may be present from the cleaning process. An oxy-acetylene torch can be used to heat the batten strip to approximately 50°c.

Preferably, the area to be cleaned is prepared to receive the coating. The preparation may comprise subjecting the area to abrasive blasting to achieve the necessary surface roughness for adherence of the coating. The abrasive blasting may utilize grit such as aluminium oxide grit.

Where the area has been cleaned by grit blasting, the method preferably further comprises removal of excess grit from the work area, such as by sweeping and/or vacuuming the work area.

The grit blasting and subsequent removal of excess grit are preferably performed immediately prior to application of the coating to minimize potential surface contamination.

Preferably, the coating is applied first to the fillet weld, with the angle of Incidence of the particle stream in the flame spraying process being perpendicular to the exposed face of the fillet weld being coated. Once the fillet weld has been coated to the desired thickness, the position and angle of the particle stream is changed to be perpendicular to the adjacent surfaces and the coating applied thereto.

Also described is a method of affording erosion protection to a junction between two titanium-clad plates, the junction comprising a batten strip welded to the plates, the batten strip being welded to the plates by fillet welds extending along the edges of the strip, the method comprising the application of a coating comprising titanium dioxide on at least one of the fillet welds.

The method may further comprise applying the coating to adjacent portions of the plate and the batten strip.

Also described is a method of affording erosion protection to a junction between two titanium-clad plates, the junction comprising a batten strip welded to the plates, the batten strip being welded to the plates by fillet welds extending along the edges of the strip, the method comprising the application of a coating comprising titanium dioxide on one of the fillet weld and to the adjacent portions of the adjacent plate and the batten strip, the coating being applied first to the fillet weld and thereafter to the adjacent portions of the plate and the batten strip.

Preferably, the coating may be applied by way of a flame spraying process, the coating being first applied to the fillet weld with the angle of incidence of the particle stream in the flame spraying process being perpendicular to the fillet weld being coated, and thereafter the position and angle of the particle stream changed to be perpendicular to the adjacent portions of the plate and the batten strip and the coating applied thereto.

### Brief Description of the Drawings

The invention will be better understood by reference to the following description of one specific embodiment thereof, as shown in the accompanying drawings in which:
Figure 1 is a schematic cross-sectional view of a junction between two titanium-clad plates used in the fabrication of an autoclave;
Figure 2 is a schematic view of a coating applied to the junction of figure 1 in accordance with the embodiment; and
Figure 3 is a schematic fragmentary view of the coating applied to the junction (on an enlarged scale).

### Best Mode(s) for Carrying Out the Invention

The embodiment is directed to reparation of a high pressure acid leach (HPAL) autoclave. Typically, such an autoclave is about 4.94 meters in diameter and about 33.4 meters long. The autoclave is fabricated using 102mm carbon steel plate which is clad with 6mm (nominal) thick grade 1 titanium. The cladding is applied to the carbon steel by an explosion bonding process.

The plates are rectangular and positioned one adjacent another. Adjacent edges of the plates are welded together, producing circumferential and longitudinal welded seams at their junctions.

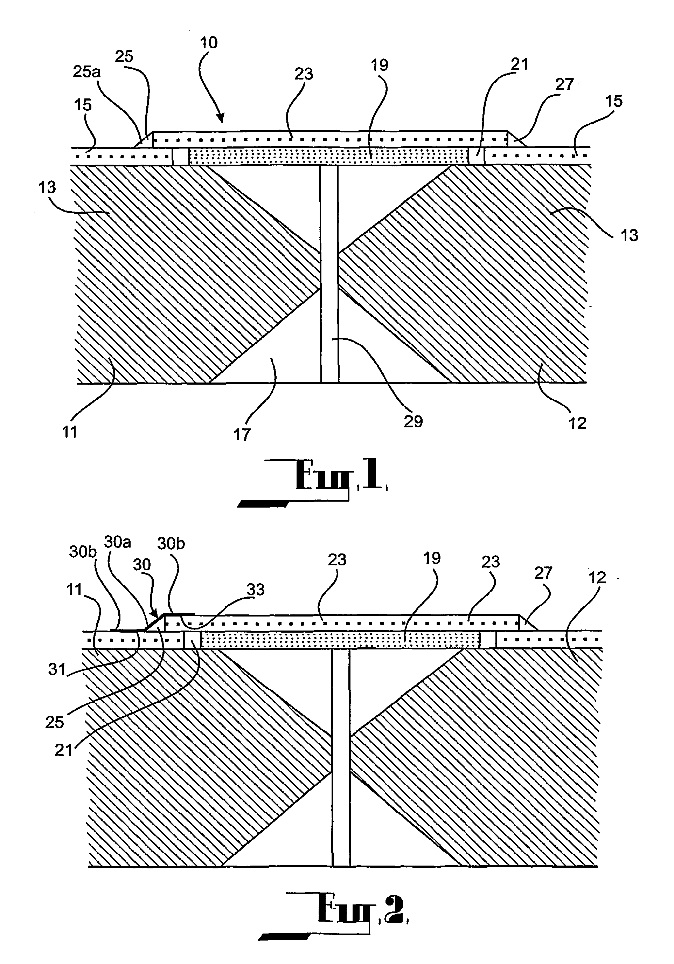

Referring to figure 1, there is shown (in cross-section) a junction 10 between two adjacent titanium-clad steel plates 11, 12. Each titanium-clad steel plate 11, 12 comprises a steel base 13 and a titanium cladding 15. A strip of titanium cladding 15 is removed from the area around all edges at the junction, typically about 12 millimeters inwardly from each edge. The adjacent edge of each steel base 13 is prepared, and the two edges are welded together by a double v-butt weld 17. The junction between adjacent plates is then cleaned and prepared for titanium welding. A filler strip 19 of copper is inserted into the space 21 created by removal of the strips of titanium. A batten strip 23 of grade 2 titanium is then placed in position so as to overlay the filler strip 19 and also bridge the titanium cladding 15 on opposed sides of the filler strip. The batten strip 23 is then welded along the edges with fillet welds 25, 27. A purge hole 29 is provided as a "tell tale" to indicate whether or not there has been a breach of the fillet welds 25, 27.

The aspects of the junction 10 described above with reference to figure 1 are of conventional construction.

The junction 10 according to the embodiment further comprises a coating 30 of titanium dioxide applied to the particular fillet weld 25 exposed to slurry flow within the autoclave; that is, the coating 30 is applied to the fillet weld 25 that faces the agitator within the autoclave.

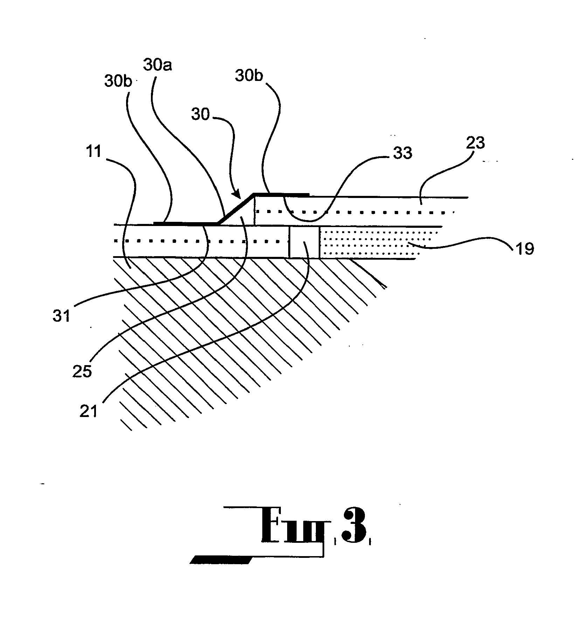

The coating 30 covers the fillet weld 25, as well as the adjacent marginal portion 31 of the plate 11 and also the adjacent marginal portion 33 of the batten strip 23. With this arrangement, the coating 30 has a central portion 30a covering the fillet weld 25 and two lateral portions 30b covering the marginal portions 31, 33 of the adjacent plate 11 and the batten strip 23, as shown in Figure 2 and 3. The marginal portions 31, 33 of the adjacent plate 11 and the batten strip 23 which are covered by the coating 30 each has a width of at least about 10mm. In other words, each lateral portion 30b of the coating 30 has a width of at least about 10mm.

The coating 30 also has a thickness of about 500 microns.

The coating 30 is applied using thermal coating technology, which in this embodiment comprises an oxy- acetylene fueled flame spray process. The feedstock for the flame spray process comprises titanium dioxide powder. Specifically, the titanium dioxide powder for this embodiment comprises powder marketed under the trade mark SULZER AMDRY 6505, with the specification -45 + 5µm.

The area to be coated is cleaned prior to application of the coating 30. The cleaning process comprises subjecting the area to a high pressure water spray.

Preheating is necessary to remove any remnant moisture that may be present from the cleaning process. An oxy-acetylene torch can be used to heat the batten strip to approximately to 50°C for this purpose.

The flame spray process requires some abrasive blasting to achieve the desired surface roughness for adherence of the coating 30. In this embodiment, the abrasive media is 46 mesh aluminum oxide. The area to be coated is abrasive blasted immediately prior to application of the coating 30 to minimize potential surface contamination. Excess grit material is, however, first removed from the work area, typically by sweeping and/or vacuuming.

The coating 30 is applied first to the fillet weld 25, with the angle of incidence of the particle stream being perpendicular to the exposed face 25a of the fillet weld. Once the face 25a of the fillet weld 25 has been coated to the desired thickness, the position and angle of the particle stream is changed to be perpendicular to the marginal portions 31, 33 of the plate 11 and batten strip 23, for application of the coating to approximately 10mm either side of the fillet weld.

To improve the performance of the coating, a non-volatile, non-flammable sealants applied to the coating 30. The sealant works by filling interstices within the inherently porous coating, thereby preventing contact between process liquor in the autoclave and the substrate of the coating. Contact between the liquor and substrate can lead to premature debonding and failure of the coating.

The coating provides the following characteristics:
- Not chemically attacked within the autoclave environment
- Does not crack due to shell stresses
- Has no apparent effect corrosion resistance of the underlying material (titanium)
- Is wear resistant to the autoclave slurry
- Can be applied in situ
- Can be removed by conventional bead blasting

By protecting the batten strip fillet weld 25, erosion damage will reduce and the life of the batten strips 23 will increase dramatically. Increasing the life of batten strips will allow for longer periods between scheduled shut downs of the autoclave and also a reduced risk of leakage. Maintenance costs will be reduced and production capacity of the autoclave increased. Additionally, the amount of repair welding will decrease, reducing the risk of permanently damaging the explosion bonded titanium liner of the autoclave.

In addition to batten strips 23, other internal components of the autoclave, such as baffle cleats, drain nozzles and other erosion-prone areas, could be coated.

## Claims

1. A vessel comprising a plurality of titanium-clad plates welded one to another, batten strips welded to adjacent plates at the junctions therebetween, the batten strips being welded to the plates by fillet welds extending along the edges thereof, and a coating comprising titanium dioxide on the fillet welds, wherein the coating covers the fillet weld and marginal portions of the adjacent plate and the batten strip, and the marginal portions of the adjacent plate and the batten strip covered by the coating each has a width of at least 10mm.

2. A vessel according to claim 1 wherein the coating has a thickness of 500 microns.

3. A vessel according to any one of the preceding claims wherein the coating is applied using thermal coating technology, such as flame spraying.

4. A vessel according to any one of the preceding claims wherein a sealant is applied to the coating.

5. A vessel according to claim 4 wherein the sealant comprises a nonvolatile, non-flammable sealant.

6. A junction between two titanium-clad plates, the junction comprising a batten strip welded to the plates, the batten strip being welded to the plates by fillet welds extending along the edges of the strip, and a coating comprising titanium dioxide on the fillet welds, wherein the coating covers the fillet weld and marginal portions of the adjacent plate and the batten strip and the marginal portions of the adjacent plate and the batten strip covered by the coating each has a width of at least about 10mm.

7. A junction according to claim 6 wherein the coating has a thickness of 500 microns.

8. A junction according to claims 6 or 7 wherein the coating is applied using thermal coating technology such as flame spraying.

9. A junction according to any one of claims 6 to 8 wherein sealant is applied to the coating.

10. A junction according to claim 9 wherein the sealant comprises a nonvolatile, non-flammable sealant.

11. A method of performing reparation work on a vessel (such as an autoclave) fabricated from a plurality of titanium-clad plates welded one to another and having batten strips welded to adjacent plates at the junctions therebetween, the batten strips being welded to the plates by fillet welds extending along the edges thereof, the method comprising the application of a coating comprising titanium dioxide on the fillet welds, wherein the coating is applied to the fillet weld and marginal portions of the adjacent plate and the batten strip, and the marginal portions of the adjacent plate and the batten strip covered by the coating each has a width of at least about 10mm.

12. A method according to claim 11 further comprising applying the coating to adjacent portions of the plate and the batten strip.

13. A method according to claim 11 or 12 wherein the coating is applied using thermal coating technology, such as flame spraying.

14. A method according to claim 11, 12 or 13 sealing the coating after its application.

15. A method according to any one of the claims 11 to 14 further comprising cleaning the area to be coated prior to application of the coating.

16. A method according to claim 15 wherein the cleaning process comprises subjecting the area to a high pressure water spray.

17. A method according to any one of claims 11 to 16 further comprising preheating the area to be coated.

18. A method according to claim 15, 16 or 17 wherein the area to be cleaned is prepared to receive the coating by preparation comprising subjecting the area to abrasive blasting to achieve the necessary surface roughness for adherence of the coating.

19. A method according to claim 18 wherein the abrasive blasting comprising grit blasting.

20. A method according to claim 19 further comprising removal of excess grit from the work area, such as by sweeping and/or vacuuming the work area.

21. A method according to claim 20 wherein the grit blasting and subsequent removal of excess grit are performed immediately prior to application of the coating.

22. A method according to any one of claims 11 to 21 wherein the coating is applied first to the fillet weld, with the angle of incidence of the coating material being perpendicular to the exposed face of the fillet weld being coating and wherein once the fillet weld has been coated to the desired thickness, the angle of the incidence of the changed to be perpendicular to the adjacent surfaces and the coating applied thereto.

23. A method according to claim 13 wherein the coating is applied using a flame spraying process, the coating being applied first to the fillet weld, with the angle of incidence of the particle stream in the flame spraying process being perpendicular to the exposed face of the fillet weld being coated, and once the fillet weld has been coated to the desired thickness, the position and angle of the particle stream being changed to be perpendicular to the adjacent surfaces and the coating applied thereto.

## Patentansprüche

1. Ein Behälter, der eine Vielzahl von aneinander geschweißten, mit Titan überzogenen Platten, an angrenzende Platten an den Verbindungsstellen dazwischen geschweißte Leistenstreifen, wobei die Leistenstreifen durch Kehlschweißnähte, die sich entlang den Kanten davon erstrecken, an die Platten geschweißt sind, und eine Beschichtung auf den Kehlschweißnähten, die Titandioxid beinhaltet, beinhaltet, wobei die Beschichtung die Kehlschweißnaht und Randabschnitte der angrenzenden Platte und des Leistenstreifens abdeckt und die Randabschnitte der angrenzenden Platte und des Leistenstreifens, die durch die Beschichtung abdeckt werden, jeweils eine Breite von mindestens 10 mm aufweisen.

2. Behälter gemäß Anspruch 1, wobei die Beschichtung eine Dicke von 500 Mikrometer aufweist.

3. Behälter gemäß einem der vorhergehenden Ansprüche, wobei die Beschichtung unter Verwendung von thermischer Beschichtungstechnik wie etwa Flammspritzen aufgetragen wird.

4. Behälter gemäß einem der vorhergehenden Ansprüche, wobei ein Dichtungsmittel auf die Beschichtung aufgetragen wird.

5. Behälter gemäß Anspruch 4, wobei das Dichtungsmittel ein nicht flüchtiges, nicht entzündbares Dichtungsmittel beinhaltet.

6. Eine Verbindungsstelle zwischen zwei mit Titan überzogenen Platten, wobei die Verbindungsstelle einen an die Platten geschweißten Leistenstreifen, wobei der Leistenstreifen durch Kehlschweißnähte, die sich entlang den Kanten des Streifens erstrecken, an die Platten geschweißt ist, und eine Beschichtung auf den Kehlschweißnähten, die Titandioxid beinhaltet, beinhaltet, wobei die Beschichtung den Leistenstreifen und Randabschnitte der angrenzenden Platte und des Leistenstreifens abdeckt und die Randabschnitte der angrenzenden Platte und des Leistenstreifens, die durch die Beschichtung abgedeckt werden, jeweils eine Breite von mindestens etwa 10 mm aufweisen.

7. Verbindungsstelle gemäß Anspruch 6, wobei die Beschichtung eine Dicke von 500 Mikrometer aufweist.

8. Verbindungsstelle gemäß den Ansprüchen 6 oder 7, wobei die Beschichtung unter Verwendung von thermischer Beschichtungstechnik wie etwa Flammspritzen aufgetragen wird.

9. Verbindungsstelle gemäß einem der Ansprüche 6 bis 8, wobei Dichtungsmittel auf die Beschichtung aufgetragen wird.

10. Verbindungsstelle gemäß Anspruch 9, wobei das Dichtungsmittel ein nicht flüchtiges, nicht entzündbares Dichtungsmittel beinhaltet.

11. Ein Verfahren zum Durchführen von Reparaturarbeit an einem Behälter (wie etwa einem Autoklav), der aus einer Vielzahl von aneinander geschweißten, mit Titan überzogenen Platten hergestellt ist und an angrenzende Platten an den Verbindungsstellen dazwischen geschweißte Leistenstreifen aufweist, wobei die Leistenstreifen durch Kehlschweißnähte, die sich entlang den Kanten davon erstrecken, an die Platten geschweißt sind, wobei das Verfahren die Auftragung einer Beschichtung auf den Kehlschweißnähten, die Titandioxid beinhaltet, beinhaltet, wobei die Beschichtung auf die Kehlschweißnaht und Randabschnitte der angrenzenden Platte und des Leistenstreifens aufgetragen wird und die Randabschnitte der angrenzenden Platte und des Leistenstreifens, die durch die Beschichtung abgedeckt werden, jeweils eine Breite von mindestens etwa 10 mm aufweisen.

12. Verfahren gemäß Anspruch 11, das ferner das Auftragen der Beschichtung auf angrenzende Abschnitte der Platte und des Leistenstreifens beinhaltet.

13. Verfahren gemäß Anspruch 11 oder 12, wobei die Beschichtung unter Verwendung von thermischer Beschichtungstechnik wie etwa Flammspritzen aufgetragen wird.

14. Verfahren gemäß Anspruch 11, 12 oder 13, das die Beschichtung nach ihrer Auftragung abdichtet.

15. Verfahren gemäß einem der Ansprüche 11 bis 14, das ferner das Reinigen des zu beschichtenden Bereichs vor der Auftragung der Beschichtung beinhaltet.

16. Verfahren gemäß Anspruch 15, wobei der Reinigungsvorgang beinhaltet, dass der Bereich einem Hochdruck-Wasserspray ausgesetzt wird.

17. Verfahren gemäß einem der Ansprüche 11 bis 16, das ferner das Vorheizen des zu beschichtenden Bereichs beinhaltet.

18. Verfahren gemäß Anspruch 15, 16 oder 17, wobei der zu reinigende Bereich durch eine Präparation, die beinhaltet, dass der Bereich Reinigungsstrahlen ausgesetzt wird, um die notwendige Oberflächenrauigkeit zum Anhaften der Beschichtung zu erreichen, präpariert wird, um die Beschichtung aufzunehmen.

19. Verfahren gemäß Anspruch 18, wobei das Reinigungsstrahlen Sandstrahlen beinhaltet.

20. Verfahren gemäß Anspruch 19, das ferner das Entfernen von überschüssigem Sand aus dem Arbeitsbereich wie etwa durch Kehren und/oder Absaugen des Arbeitsbereichs beinhaltet.

21. Verfahren gemäß Anspruch 20, wobei das Sandstrahlen und das anschließende Entfernen von überschüssigem Sand unmittelbar vor der Auftragung der Beschichtung durchgeführt werden.

22. Verfahren gemäß einem der Ansprüche 11 bis 21, wobei die Beschichtung zuerst auf die Kehlschweißnaht aufgetragen wird, wobei der Winkel des Einfalls des Beschichtungsmaterials senkrecht zu der freigelegten Fläche der Kehlschweißnaht, die beschichtet wird, ist, und wobei, sobald die Kehlschweißnaht auf die gewünschte Dicke geschichtet worden ist, der Winkel des Einfalls geändert wird, um senkrecht zu den angrenzenden Oberflächen und der darauf aufgetragenen Beschichtung zu sein.

23. Verfahren gemäß Anspruch 13, wobei die Beschichtung unter Verwendung eines Flammspritzvorgangs aufgetragen wird, wobei die Beschichtung zuerst auf die Kehlschweißnaht aufgetragen wird, wobei der Winkel des Einfalls des Partikelstroms in dem Flammspritzvorgang senkrecht zu der freigelegten Fläche der Kehlschweißnaht, die beschichtet wird, ist, und sobald die Kehlschweißnaht auf die gewünschte Dicke beschichtet worden ist, die Position und der Winkel des Partikelstroms geändert werden, um senkrecht zu den angrenzenden Oberflächen und der darauf aufgetragenen Beschichtung zu sein.

## Revendications

1. Un récipient comprenant une pluralité de plaques enduites de titane soudées les unes aux autres, des bandes couvre-joints soudées à des plaques adjacentes au niveau des jonctions entre celles-ci, les bandes couvre-joints étant soudées aux plaques au moyen de soudures d'angle s'étendant le long des bords de celles-ci, et un revêtement comprenant du dioxyde de titane sur les soudures d'angle, dans lequel le revêtement recouvre la soudure d'angle ainsi que des portions marginales de la plaque adjacente et de la bande couvre-joint, et les portions marginales de la plaque adjacente et de la bande couvre-joint recouvertes par le revêtement ont chacune une largeur d'au moins 10 mm.

2. Un récipient selon la revendication 1 dans lequel le revêtement présente une épaisseur de 500 microns.

3. Un récipient selon une quelconque des revendications précédentes dans lequel le revêtement est appliqué en utilisant une technique de revêtement thermique, telle que la projection à la flamme.

4. Un récipient selon une quelconque des revendications précédentes dans lequel un produit d'étanchéité est appliqué sur le revêtement.

5. Un récipient selon la revendication 4 dans lequel le produit d'étanchéité inclut un produit d'étanchéité non inflammable, non volatil.

6. Une jonction entre deux plaques enduites de titane, la jonction comprenant une bande couvre-joint soudée aux plaques, la bande couvre-joint étant soudée aux plaques au moyen de soudures d'angle s'étendant le long des bords de la bande, et un revêtement comprenant du dioxyde de titane appliqué sur les soudures d'angle, dans lequel le revêtement recouvre la soudure d'angle ainsi que des portions marginales de la plaque adjacente et de la bande couvre-joint et les portions marginales de la plaque adjacente et de la bande couvre-joint recouvertes par le revêtement ont chacune une largeur d'au moins environ 10 mm.

7. Une jonction selon la revendication 6 dans laquelle le revêtement présente une épaisseur de 500 microns.

8. Une jonction selon les revendications 6 ou 7 dans laquelle le revêtement est appliqué en utilisant une technique de revêtement thermique telle que la projection à la flamme.

9. Une jonction selon une quelconque des revendications 6 à 8 dans laquelle un produit d'étanchéité est appliqué sur le revêtement.

10. Une jonction selon la revendication 9 dans laquelle le produit d'étanchéité comprend un produit d'étanchéité non inflammable, non volatil.

11. Une méthode pour effectuer des travaux de réparation sur un récipient (tel qu'un autoclave) fabriqué à partir d'une pluralité de plaques enduites de titane soudées les unes aux autres et possédant des bandes couvre-joints soudées à des plaques adjacentes au niveau des jonctions entre celles-ci, les bandes couvre-joints étant soudées aux plaques par des soudures d'angle s'étendant le long des bords de celles-ci, la méthode comprenant l'application d'un revêtement comprenant du dioxyde de titane sur les soudures d'angle, dans laquelle le revêtement est appliqué sur la soudure d'angle ainsi que sur des portions marginales de la plaque adjacente et de la bande couvre-joint, et les portions marginales de la plaque adjacente et de la bande couvre-joint recouvertes par le revêtement ont chacune une largeur d'au moins environ 10 mm.

12. Une méthode selon la revendication 11 comprenant de plus l'application du revêtement sur des portions adjacentes de la plaque et de la bande couvre-joint.

13. Une méthode selon les revendications 11 ou 12 dans laquelle le revêtement est appliqué en utilisant une technique de revêtement thermique, telle que la projection à la flamme.

14. Une méthode selon les revendications 11, 12 ou 13 dans laquelle le revêtement est étanchéifié après son application.

15. Une méthode selon une quelconque des revendications 11 à 14 comprenant de plus le nettoyage de la zone devant être revêtue avant l'application du revêtement.

16. Une méthode selon la revendication 15 dans laquelle le processus de nettoyage comprend le fait de soumettre cette zone à une pulvérisation d'eau à haute pression.

17. Une méthode selon une quelconque des revendications 11 à 16 comprenant de plus le pré-chauffage de la zone devant être revêtue.

18. Une méthode selon les revendications 15, 16 ou 17 dans laquelle la zone devant être nettoyée est préparée pour recevoir le revêtement par une préparation comprenant le fait de soumettre cette zone à une abrasion par projection afin d'obtenir la rugosité de surface nécessaire à l'adhérence du revêtement.

19. Une méthode selon la revendication 18 dans laquelle l'abrasion par projection comprend le grenaillage.

20. Une méthode selon la revendication 19 comprenant de plus le retrait de l'excédent de grenaille de la zone de travail, par exemple par balayage et/ou par aspiration de la zone de travail.

21. Une méthode selon la revendication 20 dans laquelle le grenaillage et le retrait subséquent de l'excédent de grenaille sont effectués tout de suite avant l'application du revêtement.

22. Une méthode selon une quelconque des revendications 11 à 21 dans laquelle le revêtement est appliqué en premier lieu sur la soudure d'angle, l'angle d'incidence du matériau de revêtement étant perpendiculaire à la face exposée de la soudure d'angle en cours de revêtement et dans laquelle une fois la soudure d'angle revêtue à l'épaisseur souhaitée, l'angle d'incidence est modifié pour être perpendiculaire aux surfaces adjacentes et au revêtement appliqué sur celles-ci.

23. Une méthode selon la revendication 13 dans laquelle le revêtement est appliqué à l'aide d'un processus de projection à la flamme, le revêtement étant appliqué en premier lieu sur la soudure d'angle, l'angle d'incidence du flux de particules dans le processus de projection à la flamme étant perpendiculaire à la face exposée de la soudure d'angle en cours de revêtement, et une fois la soudure d'angle revêtue à l'épaisseur souhaitée, la position et l'angle du flux de particules étant modifiés pour que l'angle soit perpendiculaire aux surfaces adjacentes et au revêtement appliqué sur celles-ci.
